# EUROPÄISCHE PATENTSCHRIFT

(11) **EP 0 548 857 B1**
(45) Veröffentlichungstag und Bekanntmachung des Hinweises auf die Patenterteilung: **05.03.1997**
(21) Anmeldenummer: 92121641.2
(22) Anmeldetag: 18.12.1992
(51) Int. Cl.: B29C 45/26, G06K 19/077, B29C 45/56

(54) **Vorrichtung zum Herstellen von flachen Kunststoff-Formstücken, beispielsweise Ausweiskarten**
Apparatus for producing flat plastic moulded parts, for instance identity cards
Dispositif pour fabriquer des pièces moulées plates en matière plastique, par exemple des cartes d'identité

(30) Priorität: 20.12.1991 DE 4142410
(43) Veröffentlichungstag der Anmeldung: 30.06.1993
(73) Patentinhaber: GAO Gesellschaft für Automation und Organisation mbH, 81307 München (DE)
(72) Erfinder: Baader, Helmut, Dr., W-8470 Nabburg (DE)
(74) Vertreter: Klunker . Schmitt-Nilson . Hirsch

(56) Entgegenhaltungen:
- EP-A- 0 201 952
- EP-A- 0 456 323
- DE-B- 1 210 977
- GB-A- 980 617
- US-A- 2 526 877
- PATENT ABSTRACTS OF JAPAN vol. 9, no. 11 (M-351)(1734) 18. Januar 1985 & JP-A-59 159 308 (NIPPON VICTOR K.K.) 8. September 1984

## Beschreibung

Die Erfindung betrifft eine Vorrichtung gemäß dem Oberbegriff des Anspruchs 1 sowie eine mit der Vorrichtung hergestellte Ausweiskarte.

Der Einsatz von Spritzgußvorrichtungen zur Herstellung von Ausweiskarten ist vor allem im Zusammenhang mit der Herstellung sogenannter Chipkarten bekannt geworden. Bei einer aus der EP-A1 0 267 826 bekannten Vorrichtung sind zwei zueinander bewegliche Formteile vorgesehen, die einen der Konfiguration der Karte entsprechenden Hohlraum einschließen. Mit der bekannten Vorrichtung werden Kartenkörper mit einer Aussparung hergestellt, in die dann ein sogenanntes Modul, welches im allgemeinen aus einen Trägerfilm mit einem integrierten Baustein und Kontaktflächen besteht, eingesetzt werden kann. Derartige auf einem Trägerfilm angeordnete Module sind beispielsweise aus der EP-A2 0 268 830 bekannt. Bei der bekannten Vorrichtung wird die Aussparung durch einen in den Formraum ragenden Kern oder Stempel, der dem Umriß der Aussparung entspricht, erzeugt. Zur Herstellung der Karte wird schmelzflüssiger Kunststoff über eine Düse oder Öffnung in einer Formhälfte mit sehr hohem Druck in den Formraum gespritzt. Dabei müssen die Formteile so zusammengepreßt werden, daß kein Kunststoff zwischen die Formteile dringt. Ein solches Überspritzen führt nicht nur zu einer Gratbildung am Formteil, sondern in den meisten Fällen auch zu einer Beschädigung des Werkzeugs.

Die notwendige Zuhaltekraft wird durch eine sogenannte Schließeinheit aufgebracht (in der EP-A1 nicht gezeigt), mit der auch das Öffnen und Schließen des Werkzeugs vorgenommen wird. Die Schließeinheit besteht im allgemeinen aus einem hydraulisch betätigten Kniehebel, der an einem Ende mit einer Formhälfte und am anderen Ende mit einem Holm der Spritzgußmaschine verbunden ist. Bei dem aus der EP-A1 bekannten Werkzeugaufbau wurde eine solche Schließeinheit besonders stark belastet werden, da nahezu die gesamte Formraumfläche senkrecht zur Öffnungsrichtung der Form steht. Die auf die Schließeinheit wirkende Kraft errechnet sich aus dem im Formraum vorhandenen Spritzdruck multipliziert mit der senkrecht zur Öffnungsrichtung wirkenden Fläche des Formraums, die in diesem Fall der Fläche der herzustellenden Ausweiskarte entspricht. Bei einem Spritzdruck von etwa 1000 bar muß eine Schließeinheit eine Zuhaltekraft von etwa 5 - 600.000 Newton/Karte aufbringen, um einen sicheren Arbeitsablauf zu gewährleisten. Schließeinrichtungen mit hohen Zuhaltekräften sind mit einer entsprechend aufwendigen Auslegung der Spritzgußmaschine verbunden und erhöhen zwangsläufig auch die Maschinenkosten, die sich letztlich auf den Preis des Produkts auswirken.

Bei der bekannten Vorrichtung befindet sich die Einspritzöffnung gegenüber dem die Aussparung erzeugenden Stempel. Durch diese Anordnung entsteht auf der Oberfläche der Karte ein Angußpunkt, der in vielen Fällen unerwünscht ist. Dies ist vermeidbar, wenn die Einspritzöffnung, wie auch bekannt, an die Seitenkante des Formraums verlegt wird. Dabei besteht aber das Problem, daß sich das eingespritzte Kunststoffmaterial vor allem von der Einspritzöffnung aus gesehen hinter dem Stempel nicht optimal verteilen kann. Qualitätseinbußen wie Bindenähte ode Lufteinschlüsse sind die Folge. Da die Karten im Gebrauch zum Teil sehr starken Biegebelastungen ausgesetzt sind, führen derartige Unregelmäßigkeiten in der Materialverteilung schon nach vergleichsweise kurzer Lebensdauer zu einem Bruch der Karte.

Aus der JP-A 59-159308 ist eine Vorrichtung gemäß dem Oberbegriff des nebengeordneten Anspruchs 1 bekannt. Es ist dieser Druckschrift jedoch nicht zu entnehmen, wie diese Vorrichtung an die speziellen Erfordernisse der Herstellung von Karten mit einem IC-Modul anzupassen ist.

Die Aufgabe der Erfindung besteht darin, eine Vorrichtung zur Herstellung von Ausweiskarten vorzuschlagen, die eine kostengünstige Herstellung von Ausweiskarten ermöglicht. Außerdem soll die Lebensdauer der Karten verbessert werden.

Die Aufgabe wird durch die in den Ansprüchen 1 und 6 angegebenen Merkmale gelöst.

Ein wesentliches Merkmal der erfindungsgemäßen Lösung besteht darin, den für die Herstellung von Karten vorwiegend zweidimensional gestalteten Formraum, abweichend von der sich anbietenden Lage nicht senkrecht zur Öffnungsrichtung der Formhälften anzuordnen, sondern zur Öffnungsrichtung hin geneigt. Auf diese Weise läßt sich die für die Zuhaltung der Form benötigte Haltekraft auf die Kraft reduzieren, die sich gemäß Kräfteparallelogramm aus der senkrecht zur Öffnungsrichtung projizierten Fläche ergibt. Die parallel zur Öffnungsrichtung auftretende Kraft kann bei geschlossener Form durch das gegeneinander Verspannen der Formhälften sowie durch entsprechende Wandstärken der Form aufgenommen werden. Damit wird der größte Teil der Zuhaltekraft von Werkzeug selbst, d. h. von den Formhälften, aufgenommen. Die Schließeinrichtung hat nur noch einen vergleichsweise geringen Teil der Zuhaltekraft aufzubringen und kann entsprechend kleiner dimensioniert werden. Dies ist vor allem für sogenannte Mehrnutzenwerkzeuge von besonderem Interesse, mit denen gleichzeitig eine Vielzahl von Ausweiskarten gespritzt werden. Trotz der in diesem Fall entsprechend der Zahl der Karten vervielfachten Flächenkraft kann das Werkzeug wegen der reduzierten Zuhaltekraft in einer Spritzgußmaschine kleinerer Bauart eingesetzt werden, was sich unmittelbar auf den Preis der Maschinenkosten und somit auch auf den Stückpreis der herzustellenden Karten auswirkt.

Bei der erfindungsgemäßen Vorrichtung ist auf den geneigten Seitenflächen des Kernteils je ein Formraum vorgesehen, so daß mit einer Vorrichtung in der einfachsten Ausführungsform bereits in jedem Arbeitsgang zwei Ausweiskarten hergestellt werden können. Der Neigungswinkel zur Öffnungsrichtung bestimmt einerseits den notwendigen Öffnungshub des Werkzeugs zur Entnahme der Karten und andererseits den auf die Schließeinheit wirkenden Anteil der Zuhaltekraft. Der Neigungswinkel kann grundsätzlich in weiten Bereichen variiert werden, da er nicht durch die Formgebung des Raumteils bestimmt wird. Ausgehend von einer bestimmten Anzahl von Formräumen wird man den Neigungswinkel vorzugsweise so einstellen, daß das Werkzeug zur Minimierung der Maschinenkosten in einer Spritzgußmaschine möglichst kleiner Bauart, d. h. einer Maschine mit gering ausgelegter Zuhaltekraft, eingesetzt werden kann. Letztendlich wird die Wirtschaftlichkeit der Herstellung im wesentlichen durch die Anzahl der Formräume und die Größe der Spritzgußmaschine festgelegt.

Erfindungsgemäß ist ferner im Kernteil des Werkzeugs wenigstens ein zwischen einer ersten und einer zweiten Stellung in und aus dem Formbereich bewegbarer Stempel vorgesehen. Dadurch wird das Kunststoffmaterial zunächst in einen Ausgangsformraum gespritzt, dessen Konfiguration im wesentlichen derjenigen des Formstücks entspricht, in die der Stempel aber noch nicht eingeführt ist. Da keine den Fließweg behindernde Querschnittsverengungen bei diesem anfänglichen Zustand des Formraums vorliegen, ergeben sich keinerlei Probleme hinsichtlich des Füllens des Formraums mit dem Kunststoffmaterial. Zu einem bestimmten Zeitpunkt während des Einspritzvorgangs wird der Stempel zur Herstellung einer für die Einbettung eines Moduls geeigneten Aussparung in den Formraum eingedrückt, wobei das Kunststoffmaterial im Bereich des Stempels in die Form zurückgepreßt wird. Mit der erfindungsgemäßen Vorrichtung können Ausweiskarten mit Aussparung hergestellt werden, die auch im Bereich der Aussparung eine gleichmäßige Molekülorientierung aufweisen. Die Karten haben auch bei starken Biegebelastungen im Gebrauch eine deutlich höhere Lebensdauer.

Gemäß einer Ausführungsform der Erfindung wird der in den Formraum bewegbare Stempel genutzt, um aus einem durch das Kernelement geführten Trägerband mit einzelnen Modulen jeweils ein Modul auszustanzen und das ausgestanzte Modul während des Einspritzvorgangs in das Kunststoffmaterial derart einzupressen, daß die Oberfläche des Moduls mit der Kartenoberfläche bündig abschließt. Bei dieser Vorgehensweise kann das Modul bereits während der Kartenherstellung in den Kartenkörper eingesetzt werden, womit eine besonders rationelle und wirtschaftliche Methode zur Herstellung von in Spritztechnik hergestellten Ausweiskarten mit integriertem Schaltkreis möglich ist.

Weitere Ausführungsformen und Vorteile der Erfindung ergeben sich aus den Unteransprüchen sowie aus der nachfolgenden Beschreibung anhand der Zeichnung.

Es zeigen:
- Fig. 1: in stark schematisierter Form eine Ausführungsform einer erfindungsgemäßen Vorrichtung,
- Fig. 2: das Kernteil der Vorrichtung mit einer Mehrnutzenanordnung,
- Fig. 3: einen Ausschnitt der Vorrichtung im Bereich eines Formraums mit beweglichem Stempel und
- Fig. 4: einen Ausschnitt der Vorrichtung im Bereich des Formraums mit einem Stempel zum Ausstanzen von Modulen.

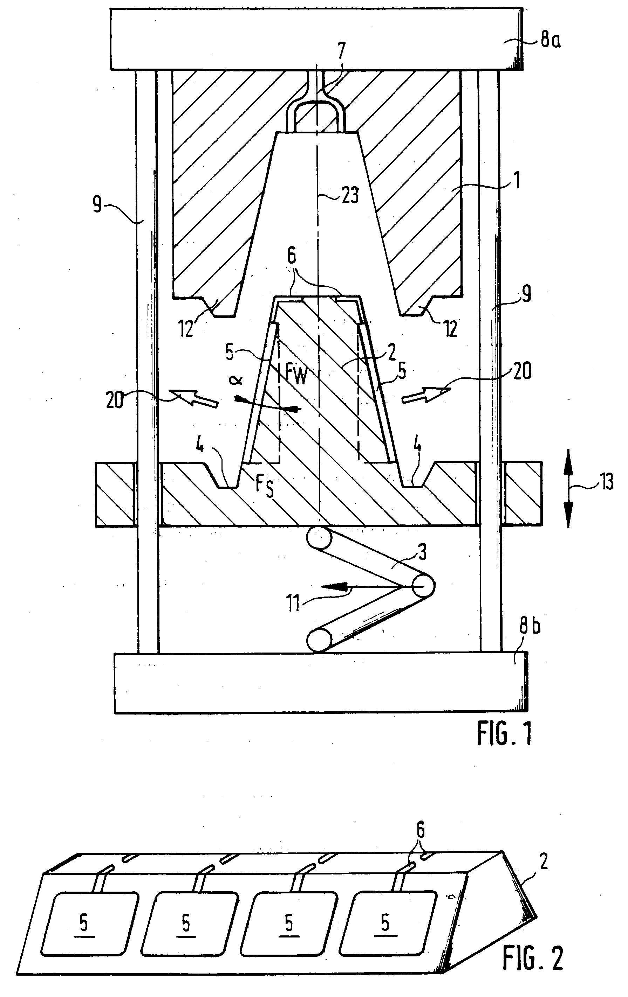

Die Fig. 1 zeigt in stark schematisierter Form ein Spritzgießwerkzeug gemäß der Erfindung. Das Werkzeug besteht aus einem konisch geformten Kernteil 2 und einem dem Kern angepaßten Senkteil 1. Das Senkteil, in dem sich der Angußkanal 7 befindet, ist an einem Holm 8a der Schließeinheit befestigt. Das Kernteil ist über einen sogenannten Kniehebel 3 mit einem weiteren Holm 8b der Schließeinheit verbunden. Die Holme 8a, 8b sind über Führungsstangen 9 miteinander fest verschraubt und dienen außerdem zur Führung des Kernteils während des Öffnens bzw. Schließens der Form.

Auf den Seitenflächen des Kernteils ist je ein der Konfiguration der zu spritzenden Karte angepaßter Formraum 5 vorgesehen, wobei jeder Formraum mit einem Anspritzkanal 6 in Verbindung steht, der bei geschlossener Form mit dem Angußkanal 7 des Senkteils zusammengeführt wird. Details des Angußsystems sind nicht Gegenstand dieser Erfindung, so daß an dieser Stelle auf weitere Ausführungen dazu verzichtet werden kann.

Bei Bewegung des Kniehebels 3 in Richtung des Pfeils 11 wird das Kernteil mit dem Senkteil zusammengeführt und die Form geschlossen. Die Öffnungs- bzw. Schließrichtung ist durch den Pfeil 13 gekennzeichnet. Im geschlossenen Zustand greifen Vorsprünge 12 des Senkteils in entsprechend den Vorsprüngen geformte Vertiefungen 4 des Kernteils formschlüssig ein, was zu einer gegenseitigen Verspannung der Formteile führt. Wird nun über den Angußkanal 7 und die sich daran anschließenden Verbindungskanäle 6 schmelzflüssige Kunststoffmasse in die Formräume 5 gepreßt, wird der größte Teil der Zuhaltekraft vom Werkzeug selbst, d. h. von den gegenseitig verspannten Formhälten, aufgenommen. In Abhängigkeit vom Neigungswinkel α bzw. der Neigung der Formraumebene zur Öffnungsrichtung 13 (Symmetrielinie 23) kann das Verhältnis der Kräfte eingestellt werden, die auf die Zuhaltung (Kniehebel 3) und die Form selbst (senkrecht zur Symmetrielinie 23) wirken. Das Kräfteverhältnis entspricht dem der Projektionsflächen Fₛ und F_{w}. Im vorliegenden Beispiel ist dieses Kräfteverhältnis etwa 4 : 1, d. h. die Form nimmt etwa 80 % der während des Spritzvorganges auftretenden Kräfte auf.

Die Verteilung der Zuhaltekräfte ist somit bei zweidimensionalen Formstücken vorwiegend abhängig vom Neigungswinkel α. Der Neigungswinkel α bestimmt allerdings auch den Öffnungshub des Werkzeugs zur Entnahme der fertiggespritzten Formteile, die bei der in Fig. 1 gezeigten Ausführungsform durch eine, in der Figur nicht gezeigte, Entnahmevorrichtung in Richtung der Pfeile 20 vorgenommen wird. Während mit zunehmendem Winkel α die auf die Schließeinheit wirkende Kraftkomponente wächst, kann der Öffnungshub des Werkzeugs entsprechend kleiner gewählt werden. Der Neigungswinkel α = O wäre somit im Prinzip ideal, da in diesem Fall nahezu keine Kraft mehr auf die Zuhaltung wirkt. Dieser Winkel ist jedoch nicht sinnvoll, da in diesem Fall die Form nach dem Einspritzen, aufgrund der anhaltenden Flächenreibung, nahezu nicht mehr zu öffnen ist. Beim Winkel α = 90° wirkt die gesamte Flächenkraft auf die Zuhaltung.

Bei der Dimensionierung wird man sinnvollerweise einen Winkel zwischen den genannten Extremen wählen. Berücksichtigt man zusätzlich den maximal zu akzeptierenden Hub des Kernteils 1 sowie die zur Verfügung stehende Zuhaltekraft einer für den Anwendungsfall ausgewählten Spritzgußmaschinen, so kann der Neigungswinkel in Abhängigkeit von diesen beiden weiteren Parametern festgelegt werden.

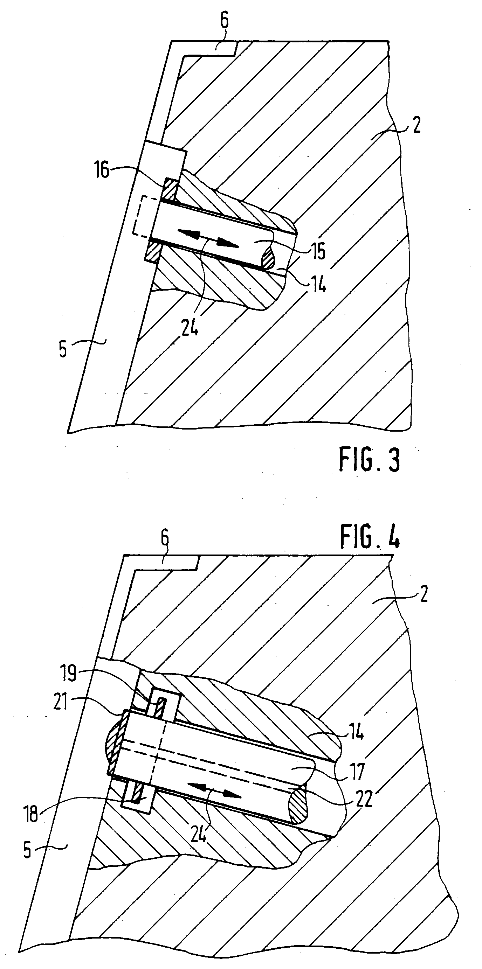

Die Fig. 2 zeigt ein Kernteil mit 2 x 4 Formräumen 5, die je einen Verbindungskanal 6 zum Anschluß an den Angußkanal 7 im Senkteil aufweisen. Gerade bei Mehrnutzenanordnungen, wie in der Fig. 2 gezeigt, kann die erfindungsgemäße Vorrichtung besonders vorteilhaft eingesetzt werden, da trotz der benötigten vervielfachten Zuhaltekraft die Verwendung von Spritzgußmaschinen kleinerer Bauart möglich ist.

Wenn die mit der Vorrichtung in Fig. 1 hergestellte Ausweiskarte mit einem sogenannten Chipmodul ausgerüstet werden soll, ist in der Karte nach der Herstellung eine dem Chipmodul angepaßte Aussparung vorzusehen. Eine solche Aussparung kann auch während des Spritzvorgangs in die Karte eingebracht werden. Eine dazu geeignete Vorrichtung ist in der Fig. 3 gezeigt.

Die Fig. 3 zeigt einen Ausschnitt aus dem Kernteil 2 im Bereich des Formraums 5. Zur Erzeugung einer zweistufigen Aussparung in einer in Spritzgußtechnik hergestellten Ausweiskarte sind ein im Formraum fest montiertes Kernelement 16 und ein in der gezeigten Pfeilrichtung 24 in einer Führung 14 beweglicher Stempel 15 vorgesehen. Durch das im Formraum fest montierte Element 16 wird eine erste Stufe der gewünschten Kartenaussparung erzeugt. Zur Erzeugung der zweiten Stufe der Aussparung ist der Stempel 15 zwischen einer ersten und einer zweiten Stellung relativ zum Kernteil 2 bewegbar. In der ersten Stellung, bei der die Stirnfläche des Stempels nicht in den Formraum 5 hineinragt, kann sich das eingespritzte Kunststoffmaterial noch relativ ungehindert im Formraum ausbreiten, da keine den Fließweg behindernden Querschnittsverengungen vorliegen. Zu einem bestimmten Zeitpunkt während des Einspritzvorgangs wird der Stempel in die in der Fig. strichliert gezeigte Stellung in den Formraum hineinbewegt, wodurch das Kunststoffmaterial im Bereich des Stempels bis zu einer verbleibenden Restwandstärke verdrängt wird. Der Zeitpunkt der Bewegung des Stempels in den Formraum ist so zu wählen, daß das durch die Einführung verdrängte Materialvolumen durch einen noch nicht vollständig gefüllten Formraum oder durch andere Ausgleichsräume aufgenommen werden kann.

Alternativ zu der in Fig. 3 gezeigten Stempelform kann die durch das Element 16 (Formraumvorsprung) und den Stempel 15 gebildete Stufe auch durch entsprechende Stufung der Stempelstirnfläche erzeugt werden. In diesem Fall befinden sich während der ersten Einspritzphase überhaupt keine Hindernisse im Formraum. In der zweiten Phase werden dann beide Stufen mittels des Stempels eingepreßt.

Mit der in Fig. 3 gezeigten Vorrichtung können Ausweiskarten mit einer zweistufigen Aussparung hergestellt werden. In eine solche Aussparung kann beispielsweise das aus der EP-A2 0 268 830 bekannte Modul eingeklebt werden. Die Karten weisen auch im Bereich der Aussparung eine gleichmäßige Molekülorientierung auf und haben daher eine deutlich höhere Lebensdauer auch bei starken Biegebelastungen im täglichen Gebrauch.

Die Fig. 4 zeigt eine weitere Ausführungsform der Erfindung, bei der ein in den Formraum 5 in einer Führung 14 beweglicher Stempel 17 genutzt wird, um in einem Arbeitsgang eine Ausweiskarte mit bereits eingelagertem IC-Modul herzustellen. Bei dieser Ausführungsform wird der bewegliche Stempel 17 genutzt, um aus einem Trägerband 19, auf dem sich in einer Reihe angeordnete IC-Module befinden, jeweils ein Modul auszustanzen und das ausgestanzte Modul in die noch nicht erstarrte Spritzgußmasse einzupressen. Das Trägerband 19 mit den IC-Modulen wird senkrecht zur Stempelbewegung durch einen Transportkanal im Kernteil 2 geführt und jeweils lagerichtig positioniert.

In einem ersten Schritt wird das Trägerband 19 so vor der in Fig. 4 strichliert dargestellten Stirnseite des Stempels 17 angeordnet, daß ein IC-Modul lagerichtig gestanzt wird. Durch Absenken des Stempels 17 in Richtung Formraum 5 (Pfeil 24) wird das IC-Modul aus dem Trägerband 19 ausgestanzt. Das ausgestanzte IC-Modul kann über einen Saugkanal 22 an der Stirnfläche des Stempels gehalten werden. Der Stempel 17 wird nun soweit in Richtung Formraum 5 verschoben, daß die Unterkante des Chipmoduls in etwa mit der Oberkante des Formraums 5 abschließt, d. h. das IC-Modul noch nicht in den Formraum hineinragt. In dieser Position wird das Kunststoffmaterial über den Einspritzkanal 6 eingespritzt. Nach ausreichender Füllung des Formraums wird der Stempel zusammen mit dem IC-Modul in die Kunststoffmasse eingepreßt und zwar soweit, daß die plane Stirnseite des Stempels 17 bündig mit der späteren Kartenoberfläche abschließt. Auch die mit einer Vorrichtung gemäß Fig. 4 hergestellten Karten zeichnen sich durch eine gleichmäßige Molekülorientierung aus verbunden mit einer deutlich verbesserten Lebensdauer.

## Patentansprüche

1. Vorrichtung zur Herstellung flacher Gegenstände, umfassend: zwei zueinander bewegliche Formteile (1, 2) und eine Schließeinrichtung (3), deren Zuhaltekraft entgegen der Öffnungsrichtung der Formteile (1, 2) wirkt, wobei die Formteile (1, 2) aus einem Kernteil, dessen Oberfläche zur Öffnungsrichtung geneigt ist und aus einem Senkteil bestehen, der entsprechend dem Kernteil (2) geformt ist und wobei die einander zugewandten und bezogen auf die Öffnungsrichtung geneigten Seitenteile von Kernteil (2) und Senkteil (1) auf einem Teilbereich ihrer Flächen jeweils einen Formraum (5) in Form der Karte einschließen und Kern- und Senkteil (2, 1) derart ausgebildet sind, daß sie sich im geschlossenen Zustand gegeneinander verspannen, dadurch **gekennzeichnet,** daß der Formraum die Form einer Karte mit einem IC-Modul, das in einer der Hauptflächen der Karte eingelagert ist, aufweist und daß in dem Kernteil (2) für jeden der auf den Seitenflächen der Formteile eingeschlossenen Formräume (5) ein bewegliches Element (15, 17) zur gesteuerten Veränderung des Volumens des Formraums (5) vorgesehen ist.

2. Vorrichtung zur Herstellung von Karten mit einem IC-Modul nach Anspruch 1, dadurch **gekennzeichnet,** daß es sich bei dem bewegbaren Element (15, 17) um einen Stanzstempel (17) handelt und daß durch den Kernteil (2) ein Band mit IC-Modulen geführt ist, aus dem mit dem Stanzstempel (17) einzelne Module ausstanzbar und in den Formraum (5) transferierbar sind.

3. Vorrichtung zur Herstellung von Karten mit IC-Modulen nach Anspruch 1, dadurch **gekennzeichnet,** daß es sich bei dem bewegbaren Element (15, 17) um einen bewegbaren Stampel (15) handelt, der in den Formraum eingeführt werden kann, so daß sich das Volumen des Formraums verkleinert.

4. Vorrichtung zur Herstellung von Karten mit IC-Modulen nach Anspruch 3, dadurch **gekennzeichnet,** daß der bewegliche Stempel (15, 17) eine Stirnfläche aufweist, die der Form des in die Karte einzubringenden IC-Moduls entspricht.

5. Vorrichtung zur Herstellung von Karten mit IC-Modulen nach Anspruch 4, dadurch **gekennzeichnet,** daß der bewegliche Stempel (15, 17) eine zweistufige Stirnfläche aufweist, mit dem in der Karte eine zweistufige Aussparung erzeugt werden kann.

6. Ausweiskarte, hergestellt mit einer Vorrichtung nach einem der vorhergehenden Ansprüche, dadurch **gekennzeichnet,** daß die Karte eine ein- oder mehrstufige Aussparung zur Aufnahme eines IC-Moduls aufweist und daß die Molekülorientierung in der Umgebung der Aussparung nahezu der Orientierung im übrigen Kartenbereich entspricht.

7. Ausweiskarte nach Anspruch 6, dadurch **gekennzeichnet,** daß die Karte ein formschlüssig im Kartenmaterial eingebettetes IC-Modul aufweist und daß die Molekülorientierung in der Umgebung des IC-Moduls nahezu der Orientierung im übrigen Kartenbereich entspricht.

## Claims

1. An apparatus for producing flat objects, comprising: two mold parts (1, 2) movable relative to each other, and a closing means (3) whose locking pressure acts against the opening direction of the mold parts (1, 2), the mold parts (1, 2) comprising a core member whose surface is inclined with respect to the opening direction and a die-block member shaped in accordance with the core member (2), and the opposing side portions of core member (2) and die-block member (1) which are inclined with respect to the opening direction each enclosing on a part of their surfaces a mold space (5) in the form of the card, and the core and die-block members (2, 1) being formed so as to brace each other in the closed state, characterized in that the mold space has the form of a card with an IC module embedded in one of the main surfaces of the card, and a movable element (15, 17) for changing the volume of the mold space (5) in controlled fashion is provided in the core member (2) for each of the mold spaces (5) enclosed on the side surfaces of the mold parts.

2. The apparatus for producing cards with an IC module of claim 1, characterized in that the movable element (15, 17) is a stamping die (17), and one guides through the core member (2) a band with IC modules out of which the stamping die (17) punches individual modules to transfer them into the mold space (5).

3. The apparatus for producing cards with IC modules of claim 1, characterized in that the movable element (15, 17) is a movable die (15) which can be introduced into the mold space so as to reduce the volume of the mold space.

4. The apparatus for producing cards with IC modules of claim 3, characterized in that the movable die (15, 17) has a face corresponding to the form of the IC module to be introduced into the card.

5. The apparatus for producing cards with IC modules of claim 4, characterized in that the movable die (15, 17) has a two-step face for producing a two-step recess in the card.

6. An identity card produced with the apparatus of any of the preceding claims, characterized in that the card has a one- or multistep recess for taking up an IC module, and the molecular orientation in the surroundings of the recess almost corresponds to the orientation in the remaining card area.

7. The identity card of claim 6, characterized in that the card has an IC module embedded positively in the card material, and the molecular orientation in the surroundings of the IC module almost corresponds to the orientation in the remaining card area.

## Revendications

1. Dispositif de fabrication d'objets plats comprenant : deux pièces de moulage (1, 2) mobiles l'une par rapport à l'autre et un dispositif de fermeture (3) dont la force de maintien agit dans le sens opposé à la direction de l'ouverture des pièces de moulage (1, 2) les pièces de moulage étant composées d'une partie noyau dont la surface est inclinée vers la direction de l'ouverture et d'une partie creuse qui a une forme correspondant à celle de la partie de noyau (2) et les parties latérales de la partie de noyau (2) et de la partie creuse (1) se faisant face et inclinées par rapport à la direction d'ouverture délimitant respectivement sur une zone partielle de leurs surfaces une cavité de moulage (5) ayant la forme de la carte et les parties de noyau et creuse (2, 1) étant conformées de façon à s'appliquer l'une contre l'autre à l'état fermé, caractérisé en ce que la cavité de moulage présente la forme d'une carte comprenant un module de circuit intégré qui est incorporé dans une des surfaces principales de la carte et en ce qu'un élément mobile (15, 17) servant à modifier de façon commandée le volume de la cavité de moulage (5) est prévu dans la partie de noyau (2) pour chacune des cavités de moulage (5) délimitées dans les faces latérales des pièces de moulage.

2. Dispositif de fabrication de cartes comprenant un module de circuit intégré selon la revendication 1, caractérisé en ce que l'élément mobile (15, 17) est un poinçon de découpage (17) et en ce qu'une bande comprenant des modules de circuits intégrés est guidée à travers la partie de noyau (2), dont des modules individuels peuvent être découpés avec le poinçon de découpage (17) et peuvent être transférés dans la cavité de moulage (5).

3. Dispositif de fabrication de cartes comprenant des modules de circuits intégrés selon la revendication 1, caractérisé en ce que l'élément mobile (15, 17) est un poinçon mobile (15) qui peut être introduit dans la cavité de moulage de façon à réduire le volume de la cavité de moulage.

4. Dispositif de fabrication de cartes comprenant des modules de circuits intégrés selon la revendication 3, caractérisé en ce que le poinçon mobile (15, 17) présente une surface frontale qui correspond à la forme du module de circuit intégré qui doit être incorporé à la carte.

5. Dispositif de fabrication de cartes comprenant des modules de circuits intégrés selon la revendication 4, caractérisé en ce que le poinçon mobile (15, 17) présente une surface frontale à deux étages avec laquelle un évidement à deux niveaux peut être réalisé dans la carte.

6. Carte d'identité fabriquée avec un dispositif selon l'une quelconque des revendications précédentes, caractérisée en ce que la carte présente un évidement à un ou plusieurs niveaux destiné à recevoir un module de circuit intégré et en ce que l'orientation des molécules aux alentours de l'évidement correspond sensiblement à celle du reste de la carte.

7. Carte d'identité selon la revendication 6, caractérisée en ce que la carte présente un module de circuit intégré incorporé par engagement de forme dans le matériau de la carte et en ce que l'orientation des molécules aux alentours du module de circuit intégré correspond sensiblement à celle du reste de la carte.
